# EUROPÄISCHE PATENTANMELDUNG

(11) **EP 0 548 382 A1**
(43) Veröffentlichungstag der Anmeldung: **30.06.1993**
(21) Anmeldenummer: 91121884.0
(22) Anmeldetag: 20.12.1991
(51) Int. Cl.: G06F 13/40, G06F 1/26

(54) **Verfahren und Anordnung zum Bewerkstelligen von Baugruppenaustauschaktionen im laufenden Betrieb eines Bussystems**

(71) Anmelder: Siemens Nixdorf Informationssysteme Aktiengesellschaft, D-33102 Paderborn (DE)
(72) Erfinder: Kuchenreuther, Karl-Heinz, Dipl.-Ing., W-8000 München 83 (DE)
(74) Vertreter: Fuchs, Franz-Josef, Dr.-Ing.

(57) **Zusammenfassung**

Bei Baugruppenaustauschaktionen im laufenden Betrieb eines Bussystems kann es wegen der Übertragung von elektrischer Energie über die Verbindungskontakte der Steckverbindungen (SP1...SPn) der Baugruppen (BG1...BGn) beim Stecken oder Ziehen einer Baugruppe zu Effekten kommen, die zur Verzunderung der Verbindungskontakte, zur Zerstörung von Baugruppenbauteilen oder zur Störung von Bussignalen führen. Da Bussignale auch dann gestört werden können, wenn vor der Baugruppenaustauschaktion die Versorgungsspannung abgeschaltet wird, wird das Bussystem vor einer Baugruppenaustauschaktion gesperrt. Nach Beendigung der Baugruppenaustauschaktion werden dann ganz gezielt die von der Baugruppenaustauschaktion betroffenen Baugruppen neu initialisiert.

## Beschreibung

Die Erfindung betrifft ein Verfahren und eine Anordnung zum Bewerkstelligen von Baugruppenaustauschaktionen im laufenden Betrieb eines Bussystems gemäß den Merkmalen der Oberbegriffe der Ansprüche 1, 2 und 4.

Bei einem in Betrieb befindlichen Bussystem kann das Problem auftreten, daß gänzlich neue Baugruppen in das Bussystem eingebracht, vorhandene Baugruppen ganz herausgenommen oder durch andere ersetzt werden müssen, daß also Baugruppenaustauschaktionen notwendig sind. Bei vielen der derzeit im Einsatz befindlichen Bussystemen sind Baugruppenaustauschaktionen im laufenden Betrieb nicht einfach möglich. In der Regel wird das zugehörige Rechnersystem vorher ab- und anschließend wieder neu eingeschaltet.

Beim Stecken bzw. Ziehen von Baugruppen im laufenden Betrieb eines Bussystems besteht das Problem, daß an den Verbindungskontakten der die Baugruppen mit dem Bussystem elektrisch verbindenden Steckverbindungen beim Ziehen oder Stecken der Baugruppen unter Spannung Effekte entstehen können, durch die es zur Verzunderung der Verbindungskontakte der Steckverbindung, zur Zerstörung von Baugruppenbauteilen oder zur Störung von Bussignalen kommen kann.

Die Probleme sind beim Stecken von Baugruppen im laufenden Betrieb eines Bussystems in der Regel so schwerwiegend, daß sie nicht übergangen werden können. Das Ziehen von Baugruppen ist zwar unter Spannung unter Umständen möglich, aber trotzdem nicht zu empfehlen. Den einzelnen einander zugeordneten Verbindungskontakten einer Steckverbindung sind Kapazitäten zugeordnet, durch die beim Ziehen der Baugruppen die Spannungsverhältnisse auf den Baugruppen nach dem Auseinandergehen der Verbindungskontakte der Steckverbindung noch eine Zeit lang aufrechterhalten werden und dann langsam abklingen. Beim Stecken der Baugruppen sind diese Kapazitäten meist entladen, so daß zwischen den einzelnen Verbindungskontakten vor dem Stecken einer Baugruppe ein maximales Spannungsgefälle besteht, durch das es zu einer schlagartigen Veränderung der elektrischen Verhältnisse für das Bussystem und die jeweilige Baugruppe mit den oben erwähnten nachteiligen Effekten kommt.

Die Verzunderung von Verbindungskontakten wird beispielsweise durch Funkenbildung beim Stecken oder Ziehen einer Baugruppe hervorgerufen. Die Zerstörung von Baugruppenteilen wird beispielsweise durch falsch laufende Ströme verursacht, wenn beim Stecken einer Baugruppe die Versorgungsspannung anliegt, bevor die Verbindungskontakte für die Signalübertragungswege geschlossen haben. Zu Störungen von Bussignalen kann es immer kommen, wenn eine Baugruppe eine Veränderung vorherrschender elektrischer Verhältnisse in relativ kurzer Zeit verursacht.

Die vorhin erwähnten Kapazitäten der Verbindungskontakte werden durch die in der Regel auf den Baugruppen angeordneten Abblockkondensatoren noch vergrössert. Hierdurch wird zwar die Situation beim Ziehen einer Baugruppe gegebenenfalls verbessert, beim Stecken aber verschlechtert.

Wenigstens Teile der angegebenen Probleme bestehen nicht nur bei angelegter Versorgungsspannung des Bussystems, sondern wegen der vorhandenen Kapazitäten auch dann, wenn vor dem Stecken oder Ziehen einer Baugruppe im laufenden Betrieb nur die Versorgungsspannung dieser Baugruppen abgeschaltet wird. Das Bussystem an sich ist dann immer noch aktiv und insbesondere bezüglich der Signalübertragungswege wie oben beschrieben störanfällig.

Da den in der Industrie eingeführten Bussystemen in der Regel eine genormte Schnittstelle zugrundeliegt, können die Bussysteme nicht einfach nach Belieben abgeändert werden, um für Baugruppenaustauschaktionen im laufenden Betrieb tauglich gemacht zu werden. Die zugrundeliegenden genormten Schnittstellen dürfen dabei nicht verändert werden, um die Austauschbarkeit der Produkte verschiedener Hersteller weiter zu gewährleisten.

Aufgabe der Erfindung ist es, ein Verfahren und eine Anordnung zum Bewerkstelligen von Baugruppenaustauschaktionen im laufenden Betrieb eines Bussystems anzugeben, bei denen es nicht zu den oben angegebenen nachteiligen Effekten kommt.

Diese Aufgabe wird erfindungsgemäß durch ein für die Baugruppenaustauschaktion gestartetes Verfahren gelöst, das die kennzeichnenden Merkmale des Anspruchs 1 bzw. 2 aufweist. Eine erfindungsgemäße Anordnung zur Durchführung des Verfahrens weist die im kennzeichnenden Teil des Anspruchs 4 angegebenen Merkmale auf.

Eine Verzunderung der Verbindungskontakte einer Steckverbindung für eine Baugruppe tritt nicht mehr auf, weil gezielt die Versorgungsspannung für die von der Baugruppenaustauschaktion betroffenen Baugruppen rechtzeitig abgeschaltet wird. Gleichzeitig werden dadurch Baugruppenbauteile vor einer möglichen Zerstörung durch falsch laufende Ströme geschützt. Bussignale werden nicht mehr gestört, weil dafür gesorgt wird, daß zum Zeitpunkt einer Baugruppenaustauschaktion das Bussystem zwar grundsätzlich noch aktiv, für die Baugruppen aber gesperrt ist. Bereits genormte Schnittstellen brauchen nicht verändert werden, weil sie die hierfür benötigten Leitungen und Signale bereits umfassen.

Der Lösungsvorschlag gemäß Anspruch 2 hat außerdem den Vorteil, daß auch bei älteren Bussystemen, deren übergeordnetes Betriebssystem eine von außen asynchron in das Bussystem gebrachte Sperranweisung an das Bussystem durch z.B. Setzen eines entsprechenden Signals noch nicht für Baugruppenaustauschaktionen geeignet verarbeiten kann, Baugruppenaustauschaktionen im laufenden Betrieb trotzdem durchgeführt werden können.

Die Baugruppenaustauschaktionen können deshalb im laufenden Betrieb eines Bussystems durchgeführt werden, weil durch das Sperren des Bussystems das Bussystem buszugriffsfrei ist und die einzelnen Baugruppen bezüglich Versorgungsspannung und Rücksetzsignal einzeln gesteuert werden.

Die zur Durchführung des Verfahrens nach Anspruch 2 angegebene Anordnung weist eine zusätzliche Steckplatzsteuereinheit auf, die entweder in einem eigenen Steckplatz gesteckt oder aber fest auf einer das Bussystem tragenden Trägerplatte montiert ist. Die Anordnung weist ferner eine Steuerlogik auf, durch die die Steckplatzsteuereinheit die Steckplätze für die Baugruppen bezüglich Versorgungsspannung und Rücksetzsignal einzeln ansprechen kann.

In einer vorteilhaften Weiterbildung der Erfindung dient ein Fehlersignal der dem Bussystem zugrundeliegenden genormten Schnittstelle dazu, das Bussystem zu sperren. Die in der Industrie verwendeten Bussysteme weisen in der Regel ein solches Fehlersignal auf, das Auskunft darüher gibt, ob im Bussystem ein Fehler aufgetreten ist oder nicht. Das Fehlersignal ist in der Regel so spezifiziert, daß bei einer Anzeige eines Fehlers durch dieses Signal sofort alle Bustransfers von den Baugruppen beendet und keine neuen Buszugriffe mehr gestartet werden, solange dieses Signal gesetzt ist. Derartige Signale zählen damit zu den ersten Entscheidungsträgern eines Systems.

Ein weiterer Vorteil des Fehlersignals ist, daß es in der Regel zustandsgesteuert und damit selbst zumindest indirekt vor Störungen gesichert ist. Die Baugruppen eines Bussystems überwachen nämlich dieses Signal nicht auf eine Flankenänderung hin, sondern daraufhin, ob sich der Zustand des Signals einen vorgegebenen Zeitbereich lang nicht geändert hat. Sollte dieses Signal doch einmal kurzzeitig gestört werden, dann führt das nicht automatisch dazu, daß Baugruppen fälschlicherweise wieder auf das Bussystem zugreifen.

Nachfolgend wird ein Ausführungsbeispiel der Erfindung anhand der Zeichnung näher erläutert. Es zeigen
- FIG 1: ein Bussystem gemäß der Erfindung in Prinzipdarstellung und
- FIG 2: eine bei einem Bussystem gemäß der Figur 1 verwendete Steuerlogik.

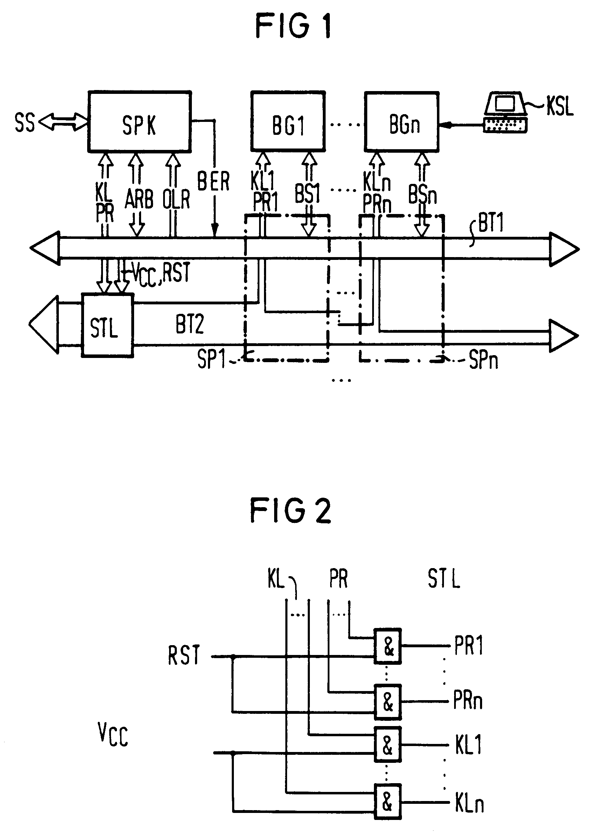

Das in der FIG 1 dargestellte Bussystem beinhaltet nur die Komponenten, die auf der untersten Systemebene notwendig sind, um Baugruppen elektrisch mit dem Bussystem zu verbinden bzw. zu trennen, sowie solche, die zur Wahrung der Konsistenz des Busprotokolls erforderlich sind. Aktionen in der Firmware und in den übergeordneten Betriebssystemschichten, wie z.B. der Bootvorgang, sind hier nicht näher erläutert.

Das gezeigte Bussystem weist einen ersten Busteil BT1 und einen zweiten Busteil BT2 auf. Über die beiden Busteile BT1 und BT2 sind Steckplätze SP1...SPn angeordnet. Die Steckplätze SP1...SPn stellen Steckverbinder dar, in die jeweils gleichnumerierte Baugruppen BG1...BGn eingesteckt werden können. Die Belegung der Verbindungskontakte der Steckverbinder entspricht dabei einer dem Bussystem zugrundeliegenden genormten Schnittstelle, z.B. der einer Multibus II-Schnittstelle. Für die einzelnen Baugruppen BG1...BGn ist deshalb bezüglich der Hardware, der Schnittstelle und dem Busprotokoll stets nur die Spezifikation dieser genormten Schnittstelle maßgebend.

Der Busteil BT1 umfaßt im wesentlichen diejenigen Signale der genormten Schnittstelle, über die ein regulärer Busbetrieb abgewickelt wird. Unterschiede zu einer vollständigen genormten Schnittstelle bestehen lediglich bezüglich einer Versorgungsspannungsleitung Vcc und einer Rücksetzleitung RST, die jetzt nicht mehr wie früher für alle Baugruppen BG1...BGn gemeinsam sondern einzeln sind. Diese Leitungen sind aus dem ersten Busteil BT1 heraus- und einer Steuerlogik STL zugeführt. Die Steuerlogik STL weist als Ausgangsleitungen private Resetleitungen PR1...PRn und Einzel-Kontrolleitungen KL1...KLn auf, die ersatzweise zu der gemeinsamen Versorgungsspannungsleitung Vcc und Rücksetzleitung RST einzeln wie erwähnt mit den jeweiligen Steckplätzen SP1...SPn verbunden sind.

Für die Baugruppe BG1 zum Beispiel setzt sich damit die genormte Schnittstelle aus der privaten Resetleitung PR1, der Einzel-Kontrolleitung KL1 und den übrigen Busleitungen BS1 zusammen. Für die n-te Baugruppe BGn setzt sich die genormte Schnittstelle aus der privaten Resetleitung PRn, der Einzel-Kontrolleitung KLn und den übrigen Busleitungen BSn zusammen. Die Busleitungen BS1...BSn sind dabei für alle Baugruppen identisch.

In einem gesonderten Steckplatz des Bussystems oder an einer gesonderten Stelle auf der das Bussystem tragenden Trägerplatte ist eine Steckplatzkontrolleinheit SPK angeordnet. Die Steckplatzkontrolleinheit SPK ist über Aktivierungsleitungen OLR und Arbitrierungsleitungen ARB mit dem ersten Busteil BT1 und über allgemeine Kontroll- und private Resetleitungen KL, PR mit der Steuerlogik STL verbunden. Die Aktivierungsleitungen OLR und die Arbitrierungsleitungen ARB bilden zusammen wieder die dem Bussystem zugrundeliegende genormte Schnittstelle. Über die Aktivierungsleitungen OLR wird der Steckplatzkontrolleinheit SPK eine bevorstehende Baugruppenaustauschaktion mitgeteilt. Die Mitteilung kann nicht nur über eine Konsole KSL und das Bussystem sondern auch über eine ihr zugeordnete serielle Schnittstelle SS zugeführt werden.

Die Steckplatzsteuereinheit SPK steuert nach Erhalt einer solchen Mitteilung dann über die Arbitrierungsleitungen ARB, die Kontrolleitungen KL und die privaten Resetleitungen PR sowie einem Bussperrsignal BER, deren Bedeutung später noch erklärt wird, die für die Baugruppenaustauschaktion notwendigen weiteren Vorgänge. Dabei leitet sie durch die Kontrolleitungen KL und die privaten Resetleitungen PR über die Steuerlogik STL den einzelnen Steckplätzen SP1...SPn unabhängig voneinander eine Versorgungsspannung und ein Rücksetzsignal zu.

Bei dem Bussperrsignal BER handelt es sich um ein solches Signal des Bussystems, das den zum Bussystem gehörenden Baugruppen einen Bussystemzustand anzeigt, aufgrund welchem alle laufenden Buszugriffe eingestellt und neue nicht mehr gestartet werden. Busfehlersignale sind beispielsweise solche Signale, da sie in der Regel die höchste Priorität aufweisen. Diese Signale sind damit geeignet, das Bussystem ganz gezielt in einen buszugriffsfreien Zustand zu schalten.

In der FIG 2 ist die Steuerlogik STL näher dargestellt. Darin sind zwei Gruppen von zwei Eingänge und einen Ausgang aufweisenden UND-Gattern gezeigt. Die jeweils einen Eingänge der UND-Gatter der einen UND-Gatter-Gruppe sind mit der für die Baugruppen eines Bussystems ansonsten gemeinsamen Rücksetzleitung RST verbunden. Die jeweils einen Eingänge der UND-Gatter der anderen UND-Gatter-Gruppe sind mit der für die Baugruppen eines Bussystems ansonsten gemeinsamen Versorgungsspannungsleitung Vcc des Bussystems verbunden. Die jeweils anderen Eingänge der UND-Gatter der einen UND-Gatter-Gruppe sind mit jeweils einer der privaten Resetleitungen PR der Steckplatzsteuereinheit SPK verbunden. Die jeweils anderen Eingänge der UND-Gatter der anderen UND-Gatter-Gruppe sind mit jeweils einer der Kontrolleitungen KL der Steckplatzsteuereinheit SPK verbunden. An den Ausgängen der UND-Gatter der einen UND-Gatter-Gruppe sind die einzelnen privaten Resetleitungen PR1...PRn und an den Ausgängen der UND-Gatter der anderen UND-Gatter-Gruppe sind die Einzel-Kontrolleitungen KL1...KLn für die jeweiligen einzelnen Steckplätze SP1...SPn angeschlossen.

Die einzelnen UND-Gatter arbeiten als Torschaltung für die Signale auf der Resetleitung RST und die Versorgungsspannung auf der Versorgungsspannungsleitung Vcc.

Nachfolgend wird der Verfahrensablauf für eine Baugruppenaustauschaktion näher erläutert. Unter Baugruppenaustauschaktion ist dabei das Einbringen einer gänzlich neuen Baugruppe, das ersatzlose Herausnehmen einer Baugruppe oder das Ersetzen einer Baugruppe durch eine andere zu verstehen.

Wie schon erwähnt, wird beispielsweise über die Konsole KSL ein für die Anzeige einer bevorstehenden Baugruppenaustauschaktion entsprechendes Kommando an die Steckplatzsteuereinheit SPK abgeschickt. In diesem Kommando sind Informationen enthalten, wie z.B., welcher Steckplatz betroffen ist, ob eine Baugruppe gesteckt, gezogen oder gezogen und gesteckt werden soll. In den Informationen können auch Systemparameter enthalten sein, die von einer übergeordneten Software weiter verwaltet werden.

Zum Beispiel kann entsprechend einer anderen zukünftigen Realisierungsmöglichkeit ein übergeordnetes Betriebssystem nach der Eingabe eines Kommandos zum Start einer Baugruppenaustauschaktion für die Erhaltung der Datenkonsistenz in den einzelnen Baugruppen BG1...BGn sorgen, die im weiteren auch als Agenten bezeichnet werden. Das Betriebssystem kann desweiteren dafür sorgen, daß keine Zugriffe mehr von den von der Baugruppenaustauschaktion betroffenen Agenten auf das Bussystem erfolgen, daß laufende abgebrochen und daß wichtige Daten abgespeichert werden. Es kann also das Betriebssystem dafür sorgen, daß das Bussystem letztlich gesperrt bzw. buszugriffsfrei wird. Danach wird die Steckplatzkontrolleinheit SPK aktiviert, die dann die Hardware-Signale für die Baugruppenaustauschaktion liefert und die Einhaltung des Busprotokolls sicherstellt.

Gemäß dem vorliegenden Ausführungsbeispiel führt die Steckplatzsteuereinheit SPK eine Arbitrierung des Bussystems durch, um das Bussystem buszugriffsfrei zu machen.

Im einzelnen führt die Steckplatzkontrolleinheit SPK folgende Aktionen durch:
- Arbitrieren des Bussystems: Dadurch wird die Steckplatzkontrolleinheit SPK Master im Gesamtsystem, so daß keiner der Agenten in der Lage ist, einen Transferzyklus zu starten. Ist das Bussystem frei, setzt die Steckplatzkontrolleinheit SPK z.B. ein Busrequest-Signal und besetzt damit das Bussystem, greift selber aber nicht auf das Bussystem zu.
- Sperren des Bussystems durch Setzen z.B. eines Busfehlersignals.
- Abschalten der Versorgungsspannung an den von der Baugruppenaustauschaktion betroffenen Steckplätzen über die Kontrolleitungen KL der Steckplatzsteuereinheit SPK und die Einzel-Kontrolleitungen KL1...KLn der Steuerlogik STL.
- Anzeigen, daß die Baugruppenaustauschaktion durchgeführt werden kann.
- Anschalten der Versorgungsspannung an den von der Baugruppenaustauschaktion betroffenen Steckplätzen, nachdem über z.B. entsprechend spezifizierte Sensorleitungen erkannt wurde, daß die betreffenden Baugruppen entfernt bzw. eingefügt worden sind.
- Einleitung der individuellen Initialisierung der von der Baugruppenaustauschaktion betroffenen Baugruppen durch die entsprechenden privaten Resetleitungen PR der Steckplatzsteuereinheit SPK und den zugehörigen privaten Resetleitungen PR1...PRn der Steuerlogik STL.
- Aufheben der Sperrung des Bussystems, nachdem die Initialisierungsphase erfolgreich beendet wurde.
- Aufheben der Busarbitrierung entsprechend dem dem Busystem zugrundeliegenden Busprotokoll.

## Patentansprüche

1. Verfahren zum Bewerkstelligen von Baugruppenaustauschaktionen im laufenden Betrieb eines Bussystems, das für zugehörige Baugruppen (BG1...BGn) Steckplätze (SP1...SPn) aufweist, denen eine genormte Schnittstelle zugrundeliegt, die Signale umfaßt, durch die das Bussystem veranlaßt wird, in einen buszugriffsfreien Zustand zu schalten,
**gekennzeichnet** durch folgende Schritte:
- Setzen des Signals, das das Bussystem veranlaßt, in einen buszugriffsfreien Zustand zu schalten,
- Abschalten der Versorgungsspannung der von einer Baugruppenaustauschaktion betroffenen Steckplätze (z.B. SP1),
- Erkennen des Abschlusses einer Baugruppenaustauschaktion
- Starten einer Initialisierungsphase bei den von der Baugruppenaustauschaktion betroffenen Baugruppen (z.B. BG1),
- Rücksetzen des Signals, das das Bussystem veranlaßt, in einen buszugriffsfreien Zustand zu schalten, und
- Freigeben des Bussystems gemäß einem dem vorliegenden Bussystem zugrundeliegenden Busprotokoll.

2. Verfahren zum Bewerkstelligen von Baugruppenaustauschaktionen im laufenden Betrieb eines Bussystems, das für zugehörige Baugruppen (BG1...BGn) Steckplätze (SP1...SPn) aufweist, denen eine genormte Schnittstelle zugrundeliegt, die Signale umfaßt, durch die das Bussystem veranlaßt wird, in einen buszugriffsfreien Zustand zu schalten,
**gekennzeichnet** durch folgende Schritte:
- Arbitrieren des Bussystems durch eine zusätzlich im Bussystem vorgesehene Steckplatzsteuereinheit (SPK),
- Setzen des Signals, das das Bussystem veranlaßt in einen buszugriffsfreien Zustand zu schalten, durch die Steckplatzsteuereinheit (SPK),
- Abschalten der Versorgungsspannung der von einer Baugruppenaustauschaktion betroffenen Steckplätze (z.B. SP1) durch die Steckplatzsteuereinheit (SPK),
- Erkennen des Abschlusses einer Baugruppenaustauschaktion durch die Steckplatzsteuereinheit (SPK),
- Starten einer Initialisierungsphase bei den von der Baugruppenaustauschaktion betroffenen Baugruppen (z.B. BG1) durch die Steckplatzsteuereinheit (SPK),
- Rücksetzen des Signals, das das Bussystem veranlaßt, in einen buszugriffsfreien Zustand zu schalten, durch die Steckplatzsteuereinheit (SPK), und
- Freigeben des Bussystems gemäß einem dem vorliegenden Bussystem zugrundeliegenden Busprotokoll durch die Steckplatzsteuereinheit (SPK).

3. Verfahren nach Anspruch 1 oder 2,
**dadurch gekennzeichnet,** daß ein Fehlersignal gesetzt wird, das das Bussystem veranlaßt, in einen buszugriffsfreien Zustand zu schalten.

4. Verfahren nach einem der vorherigen Ansprüche,
**dadurch gekennzeichnet,** daß das Signal das das Bussystem veranlaßt, in einen buszugriffsfreien Zustand zu schalten, statisch ist.

5. Anordnung zum Bewerkstelligen von Baugruppenaustauschaktionen im laufenden Betrieb eines Bussystems, das für zugehörige Baugruppen (BG1...BGn) Steckplätze (SP1...SPn) aufweist, denen eine genormte Schnittstelle zugrundeliegt, die Signale umfaßt, durch die das Busssystem veranlaßt wird, in einen buszugriffsfreien Zustand zu schalten,
**dadurch gekennzeichnet,**
daß eine Steckplatzsteuereinheit (SPK) vorgesehen ist, die neben einer Verbindung zum Bussystem eine Verbindung zu einer Steuerlogik (STL) aufweist,
daß die einzelnen Steckplätze (SP1...SPn) von einer gemeinsamen Verbindung zu einer Versorgungsspannungsleitung (Vcc) und einer gemeinsamen Verbindung zu einer Rücksetzleitung (RST) des Bussystems abgetrennt und bezüglich dieser Leitungen einzeln mit der Steuerlogik (STL) verbunden sind,
daß die Steuerlogik (STL) mit der Versorgungsspannungsleitung (Vcc) und der Rücksetzleitung (RST) des Bussystems verbunden ist und
daß abhängig von einem durch die Steuerung der Steckplatzsteuereinheit (SPK) in der Steuerlogik (STL) hervorgerufenen Steuerungszustand durch die Steuerlogik (STL) ausgewählte Steckplätze (z.B. SP1) in ausgewählter Weise mit der Versorgungsspannungsleitung (Vcc) und der Rücksetzleitung (RST) des Bussystems verbunden sind.
